# EUROPEAN PATENT APPLICATION

(11) **EP 4 737 828 A1**
(43) Date of publication of application: **06.05.2026**
(21) Application number: 24210835.5
(22) Date of filing: 05.11.2024
(51) Int. Cl.: F25J 1/00

(54) **AIR SEPARATION UNIT AND AIR SEPARATION METHOD**

(71) Applicant: Linde GmbH, 82049 Pullach (DE)
(72) Inventor: Brown C, Steven, c/o Linde GmbH, IP EMEA, 82049 Pullach, DE (DE); Chalakova, Mariyana, c/o Linde GmbH, IP EMEA, 82049 Pullach, DE (DE); Flegiel, Felix, c/o Linde GmbH, IP EMEA, 82049 Pullach, DE (DE); Florian, Hanusch, c/o Linde GmbH, IP EMEA, 82049 Pullach, DE (DE); Lauchner, Daniel, c/o Linde GmbH, IP EMEA, 82049 Pullach, DE (DE); Matamoros, Luis, c/o Linde GmbH, IP EMEA, 82049 Pullach, DE (DE); Matten, Christian, c/o Linde GmbH, IP EMEA, 82049 Pullach, DE (DE)
(74) Representative: Grundner, Sebastian

(57) **Abstract**

An air separation unit (100) is provided, the air separation unit (100)
comprising a column system (10) including a pressure column (11) configured to be operated at a first pressure level and a low pressure column (12) configured to be operated at a second pressure level below the first pressure level and a Joule-Thomson expansion unit (7) configured to expand a Joule-Thomson stream (101) of compressed, pre-purified and cooled feed air into a phase-separating unit (200) provided in the pressure column (11). The phase-separating unit (200) is provided in the pressure column (11) beneath a separation section (16) and the phase-separating unit (200) comprises a roof structure (201) configured to restrict an inflow of cryogenic liquid draining from the separation section (16) into the phase-separating unit (200). A corresponding method is also provided.

## Description

### Field

The present disclosure relates to an air separation unit and an air separation method.

### Background

The production of air products in liquid or gaseous state by cryogenic separation of feed air in air separation units is well known and described, for example, in textbooks such as H.-W. Haring (ed.), "Industrial Gases Processing", Wiley-VCH, 2006, especially section 2.2.5, "Cryogenic Rectification".

Air separation units may include rectification column systems provided as two-column systems, especially as double-column systems such as classical Linde double-column systems, but also as single-column, three-column or multi-column systems. In addition to rectification columns for the recovery of nitrogen and/or oxygen in the liquid and/or gaseous state, i.e. rectification columns for nitrogen-oxygen separation, such rectification column systems may comprise rectification columns for the recovery of other air components, in particular of noble gases.

There is the desire for improvements in air separation units and corresponding processes, particularly in connection with the production of argon.

### Summary

Against this background, an air separation unit and an air separation method comprising the features of the independent claims are proposed herein. Embodiments are the subject of the dependent claims and of the description that follows hereinbelow.

An air separation unit provided according to the present disclosure comprises a column system including a pressure column configured to be operated at a first pressure level and a low pressure column configured to be operated at a second pressure level below the first pressure level and a Joule-Thomson expansion unit configured to expand a Joule-Thomson stream of compressed, pre-purified and cooled feed air into a phase-separating unit provided in the pressure column. The phase-separating unit is provided in the pressure column beneath a separation section and the phase-separating unit comprises a roof structure configured to restrict an inflow of a cryogenic liquid draining from the separation section into the phase-separating unit.

As explained below in more detail, the biphasic throttle or Joule-Thomson stream may, after expansion, directly fed to the pressure column of an air separation unit in order to be able to dispense of an external separator. The vapor phase is supposed to remain in the pressure column, while the vast majority of the liquid phase (so-called Joule-Thomson liquid) is withdrawn and fed to the low pressure column. The liquid draining downwards in the pressure column has a higher argon content than the incoming Joule-Thomson liquid. If those liquids are mixed, the argon concentration in the stream withdrawn from the pressure column will increase by 2 to 3%. When fed into the low pressure column, the argon would then be vented together with "waste nitrogen" if the feed location is below the nitrogen section. In this case, some argon is lost.

The phase-separating unit particularly reduces mixing of the liquid draining downwards in the pressure column with Joule-Thomson liquid, which is not the case in the current feed trough designs. One challenge is that there can be a net feed of the Joule-Thomson liquid into the column as well as a net draw. So while mixing should be avoided in principle, some liquid exchange must be possible. This challenge is overcome by embodiments proposed herein.

Using the phase-separating unit provided herein both liquid phases can be kept separate to a certain extent, but a controlled exchange of liquids is still allowed. Embodiments proposed herein may particularly be combined with other proven constructive elements of other air separating unit internals. The phase-separating unit as proposed herein particularly comprises a trough-in-trough arrangement which allows for simultaneous vapor-liquid separation and liquid degassing and simultaneously avoids mixing of liquid draining downwards in the pressure column and the Joule-Thomson liquid. At the same time, the solution allows for a net liquid feed or draw if required by the process. The arrangement will not increase column height and can be accommodated with given trough dimensions.

In certain embodiments proposed herein, the phase-separating unit comprises an upper compartment and a lower compartment arranged beneath the upper compartment, the upper compartment being delimited to a region above the upper compartment by said roof structure and to the lower compartment by a dividing structure including liquid passages. This allows an even downflow of Joule-Thomson liquid from the upper compartment to the lower compartment and may serve in reducing mixing with the liquid draining downwards in the pressure column.

In certain embodiments proposed herein, the liquid passages are provided as slits and/or holes in the same and/or different positions, sizes and/or densities in the dividing structure. In such embodiments, the flow conditions may be adjusted by performing adaptations of the liquid passages.

In certain embodiments proposed herein, the upper compartment comprises a feed port configured to be supplied with the Joule-Thomson stream downstream of the Joule-Thomson expansion unit, and the lower compartment comprises a withdrawal port configured to withdraw liquid from the lower compartment. The feed port may particularly be connected to an outlet of the Joule-Thomson expansion unit and the withdrawal port may be connected to the low-pressure column.

In certain embodiments proposed herein, the upper compartment is provided with a longitudinal shape comprising two longitudinal side walls, a first transverse side wall and a second transverse side wall, the feed port being provided in the first transverse side wall and the second transverse side wall being arranged to provide an opening between an upper edge of the second transverse side wall and the roof structure to an inner space of the pressure column. This allows for passing gas of the biphasic throttle or Joule-Thomson stream after expansion into the pressure column.

In certain embodiments proposed herein, the lower compartment is provided with a longitudinal shape comprising two longitudinal side walls, a first transverse side wall and a second transverse side wall, the lower compartment comprising an opening towards an inner space of the pressure column, the withdrawal port being provided in the first transverse side wall of the lower compartment and beneath the feed port to the upper compartment, and the opening being a horizontal opening of the lower compartment being adjacent to the second transverse side wall of the lower compartment. Via the horizontal opening, a reduced amount of the liquid draining down in the pressure column, and collected particularly in a trough unit, may be withdrawn together with the Joule-Thomson liquid from the pressure column and a certain part from the Joule-Thomson liquid may be passed into the pressure column.

In certain embodiments proposed herein, the air separation unit further comprises a longitudinal trough unit comprising parallel side walls, a width of the trough unit being smaller than a width of the upper compartment of the phase-separating unit, the upper compartment of the phase-separating unit being arranged in the trough unit such that the longitudinal side walls are arranged in parallel and in a distance to the parallel side walls of the trough unit forming liquid channels. A certain impulse may, in the channels, be imparted on the liquid such that mixing with the Joule-Thomson liquid is reduced.

In certain embodiments proposed herein, a bottom wall of the trough unit is arranged in parallel with and/or at a same geodetic elevation as the dividing structure of the phase-separating unit, the trough unit comprising a liquid weir configured to provide a liquid level in the trough unit. A weir may particularly be a rim or collar around a draining opening in the bottom wall of the trough unit.

The method for cryogenic separation of air as proposed herein comprises providing air a separation unit comprising a column system including a pressure column, a low pressure column, a Joule-Thomson expansion unit and a phase-separating unit, the phase-separating unit being arranged in the pressure column beneath a separation section thereof, and comprising a roof structure. The pressure column is operated at a first pressure level and the low pressure column at a second pressure level. A Joule-Thomson stream of compressed, pre-purified and cooled feed air is expanded into the phase-separating unit provided in the pressure column using the Joule-Thomson expansion unit, and an inflow of a cryogenic liquid draining from the separation section into the phase-separating unit is restricted by the roof structure.

The method provided herein particularly includes providing a biphasic stream by said expanding the Joule-Thomson stream and phase separating the biphasic stream using the phase-separating unit, forming a liquid phase and a gaseous phase. At least a major part of the gaseous phase is passed from the phase-separating unit into an inner space of the pressure column and at least a major part of the liquid phase is withdrawn from the phase-separating unit and from the pressure column separately from further liquid withdrawn from the pressure column.

As to further details and advantages of the method proposed herein, reference is made to the explanations above regarding the air separation unit proposed herein and its embodiments. Particularly, such a method may include using an air separation unit according to any of the embodiments proposed herein.

### Figures

Embodiments as disclosed herein will now be described, by way of example only, with reference to accompanying drawings, in which
Figure 1 shows an air separation unit;
Figures 2A and 2B show a phase-separating unit according to an embodiment disclosed herein in simplified perspective views; and
Figures 3A and 3B show a phase-separating unit in a pressure column according to an embodiment disclosed herein in a simplified side and top view.

### Embodiments

In the Figures, elements of identical, essentially identical, functionally comparable, or technically compatible function and/or purpose may be identified with identical reference numerals, and repeated explanations may be omitted for reasons of conciseness. Explanations herein relating to devices, apparatus, arrangements, systems, etc., according to certain embodiments disclosed herein, likewise may apply to methods, processes, procedures, etc. according to corresponding embodiments.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention.

Various embodiments as disclosed herein may suitably comprise, consist of, or consist essentially of, appropriate and technically sensible combinations of the disclosed elements, components, features, parts, steps, means, etc., other than those specifically described herein. In addition, this disclosure may include other inventions not presently claimed, but which may be claimed in future, particularly when encompassed by the scope of the independent claims.

The following explanations and definitions relating to some of the principles of the invention may apply to all or some of the embodiments presented herein, and the explanation of certain aspects in connection with only some or one of the embodiments should not be taken to mean that these aspects cannot also be realised with other or all embodiments, as far as technically possible and reasonable.

The conjunction "and/or", when used in a list before the last element of the list or enumeration, should be understood to mean that all terms mentioned in the list can be combined with each other in any way possible. In other words, "A, B and/or C" particularly means "A and/or B and/or C" or "at least one of the elements A, B, C in any combination". The terms used in the context of the present disclosure generally have the meanings recognised in the art.

Absolute and relative spatial and orientation terms such as "above", "below", "beneath", "adjacent", "side-by-side", "besides", "vertical", "horizontal", etc., are used herein to refer to the relative and absolute spatial positioning of components, regions, units, etc. in normal operation, particularly of an air separation unit, while during transport, for example, the orientation may be different. If one component, region or unit is described herein as being arranged "above" another component, region or unit, this shall refer to the upper end of the lower of the two components, regions or units being at a lower or the same geodetic elevation as the lower end of the upper of the two components, regions or units, and the projections of the two components, regions or unit overlapping in a horizontal plane. In particular, the two components, regions or units may be positioned "exactly" above each other, i.e., the axes of the two components, regions or units perpendicular to the horizontal plane are on the same vertical straight line. However, this is not a requirement of embodiments that may be disclosed herein, especially if one of the two components, regions or units, for example a rectification column or a column part with a smaller diameter, is to have the same distance to the wall of a cold box as another with a larger diameter. Essentially the same applies, mutatis mutandis, to the term "below" or "beneath".

The rectification columns of the rectification column systems of air separation units mentioned at the outset may be operated in different pressure ranges. Known double column systems may comprise a so-called pressure column (also called high pressure column, medium pressure column or lower column) and a so-called low pressure column (upper column). The pressure column is typically operated in a pressure range of 4 to 7 bar, especially at about 5.3 bar, whereas the low pressure column is operated in a pressure range of typically 1 to 2 bar, especially at about 1.4 bar. In certain cases, higher or different pressures can also be used in both rectification columns. The pressures given here and below are absolute pressures at the top of the respective columns, and the terms "pressure column" and "low pressure column" are to be understood as customary in the art of cryogenic air separation.

Air separation units can be designed differently depending on the air products to be supplied and their pressures and physical states. For example, so-called internal compression is used to provide pressurized gaseous air products, particularly oxygen. For internal compression, a cryogenic liquid is withdrawn from the rectification column system, subjected to a pressurization in liquid state, and converted to the gaseous or supercritical state by heating in the main heat exchanger. For further details, reference is made to Häring (see above), Section 2.2.5.2, "Internal Compression". For converting a pressurized, cryogenic liquid in an air separation unit including internal compression to the gaseous or supercritical state, a high-pressure counter-current stream of nitrogen or air is required for thermodynamic reasons.

Such a high-pressure counter-current stream may particularly be a so-called throttle or Joule-Thomson stream. This is a quantity of air that is at least predominantly liquefied under pressure in the main heat exchanger and expanded into the pressure column, in particular via a throttle valve. A Joule-Thomson turbine can also be used instead of a throttle valve, for which reason the term "Joule-Thomson expansion unit" is used hereinbelow. Expansion of the throttle or Joule-Thomson stream generally results in a biphasic fluid of which the gaseous phase is advantageously sent to the pressure column while the liquid phase is advantageously sent to the low pressure column. This requires separation of the gaseous and liquid phases. In order to be able to dispense with an external separator, said separation may be made to take place within the pressure column by installing a liquid separator. The throttle or Joule-Thomson stream may be one of several streams of air pre-purified in a so-called pre-purification unit, thereafter cooled in the so-called main heat exchanger, expanded where necessary and sent to the pressure or low-pressure column. These air streams may be provided at different pressure levels which may be obtained by common or individual compression and/or expansion steps using suitable machinery.

In addition to the explanations given herein, reference is made regarding the function and purpose of different air streams to the technical literature, for example F.G. Kerry, Industrial Gas Handbook: Gas Separation and Purification, CRC Press, 2006, in particular sections 2.4, "Contemporary Liquefaction Cycles," 2.6, "Theoretical Analysis of the Claude Cycle," and 3.8.1. "The Lachmann Principle."

Air separation units with crude and pure argon columns can be used for argon production. An example is illustrated by Häring (see above) in Figure 2.3A and described from page 26 in the section "Rectification in the Low-pressure, Crude and Pure Argon Column" and from page 29 in the section "Cryogenic Production of Pure Argon". As explained there, argon accumulates or reaches a concentration maximum at a certain height in the low pressure column. At this or at another favourable point, possibly also below the argon maximum, the so-called argon transition, gas enriched in argon with an argon concentration of typically 5 to 15 mole percent can be withdrawn from the low pressure column and transferred to the crude argon column. This gas typically contains about 100 ppm nitrogen and otherwise essentially oxygen. Argon production not necessarily entails using two separate columns external to the low pressure column, as the functions of the crude and pure argon columns can also be combined into a single column. Embodiments disclosed herein generally involve argon production of some kind, including withdrawing gas enriched in argon and transferring the same from the low pressure column to a column or column arrangement used for argon production. Essentially only the oxygen contained in this gas is returned to the low pressure column in the arrangements under consideration.

The terms oxygen section, argon section and nitrogen section are commonly used in the field of cryogenic air separation and therefore readily understood by the skilled person. As e.g. explained in connection with Figure 2.4 in Häring (see above), although the argon concentration of the ambient air is quite small with less than one percent, it has a strong impact on the concentration profile of the low pressure column. It would therefore not be adequate to describe the separation in the low pressure column as a binary oxygen-nitrogen rectification in which the presence of argon only represents a minor disturbance. This is because in the lowest section of the low pressure column, the so-called oxygen section, with about 30 to 40 theoretical trays, an essentially pure binary separation between oxygen and argon takes place. At the upper end of this section, where the argon content reaches its maximum and where the feed gas to the crude argon column, if present, is withdrawn, the binary oxygen-argon rectification transforms within a few theoretical trays into a ternary rectification. The nitrogen section may be the topmost section of a low-pressure column.

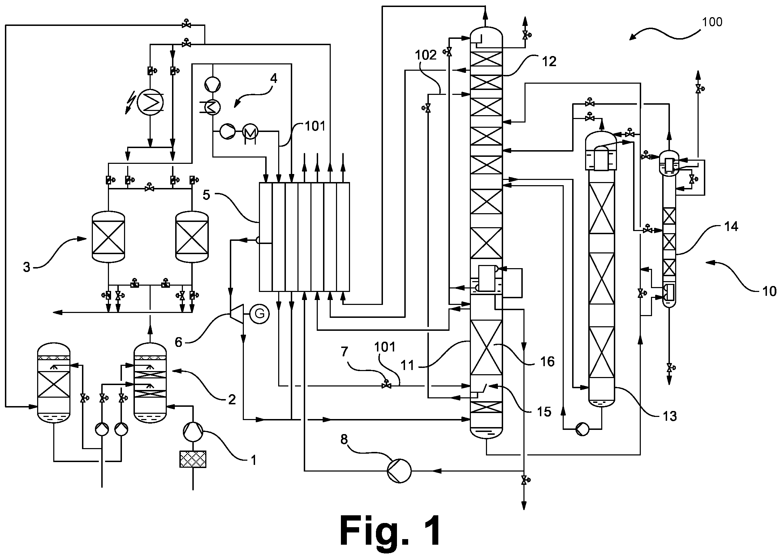

Figure 1 schematically illustrates an air separation unit 100 of a type disclosed, e.g., in section 2.2.5 of Häring (see above). For detailed explanations of the design and mode of operation of air separation unit 100, in which embodiments as proposed herein may be realized, reference is made to specialist literature. An air separation unit 100 for use with the present invention can be designed in a wide variety of ways. Although an air separation unit 100 with a two-part raw argon column system is shown and described in connection with Figure 1, embodiments as disclosed herein may also particularly be used in connection one-part or multi-part raw argon columns.

The air separation unit 100 shown in Figure 1 in the form of an example comprises a main air compressor 1, a pre-cooling system 2, a pre-purification unit 3, a booster compressor arrangement 4, a main heat exchanger 5, an expansion turbine 6, a Joule-Thomson expansion unit 7, a pump 8 and a rectification column system 10. In the example shown, Joule-Thomson expansion unit 7 is provided as an expansion valve, but Joule-Thomson expansion unit 7 may also be provided as an expansion turbine and/or a combination of different expansion units. In the example shown, the rectification column system 10 comprises a classic double column arrangement comprising a pressure column 11 and a low-pressure column 12 as well as a crude argon column 13 and a pure argon column 14.

In the air separation unit 100, atmospheric air is aspirated and compressed by means of the main air compressor 1 via a filter unit not specifically labelled. The compressed feed air is sent to pre-cooling system 2 which is operated with cooling water. The precooled feed air is then purified in pre-purification unit 3. In pre-purification unit 3, which typically comprises a pair of adsorber vessels used in alternating operation, the pre-cooled feed air is largely liberated from water and carbon dioxide. Downstream of the pre-purification unit 3, the feed air is divided into different air streams. One of the air streams is completely cooled at the pressure level of the feed air provided by the main air compressor 1 in the main heat exchanger 5. A further air stream is further compressed in further compression unit 4 and also cooled in the main heat exchanger 5, but only to an intermediate temperature level. After cooling to the intermediate temperature level, this so-called turbine stream is expanded by means of the expansion turbine 6 to the pressure level of the completely cooled partial flow, combined with the latter, and sent to the pressure column 11.

A yet further air stream 101, which is the throttle or Joule-Thomson stream referred to above, is compressed in booster compression arrangement 4 to a yet higher pressure level, is completely cooled in the main heat exchanger 5, and is thereafter expanded, via expansion unit 7, into the pressure column 11. It should be understood that embodiments as disclosed herein may also include other ways of providing a throttle or Joule-Thomson stream 101. For example, instead of a "main air compressor-booster air compressor" arrangement, as shown in Figure 1, a "high air pressure" arrangement may be used. These terms are specifically explained, e.g., in the introductory section of US 2017/0234614 A1 to which reference is made herein, and which is included by reference as far as allowable in certain jurisdictions.

To dispense of an external separator, a liquid collecting unit 15 is provided in the pressure column 11 from which liquid is withdrawn and passed to low pressure column 12 as a stream 102, while gas may essentially freely rise in pressure column 11. As mentioned above and below, as liquid draining from upper regions of pressure column 11, comprising a higher argon content, and liquid being provided by throttle or Joule-Thomson stream, comprising a lower argon content, mix in liquid collecting unit 15, argon may be lost via stream 102 and the low-pressure column 12.

An oxygen-enriched liquid bottom fraction and a nitrogen-enriched gaseous top fraction are formed in the pressure column 11. The oxygen-enriched liquid bottom fraction is withdrawn from the pressure column 11, partly used as a heating medium in a bottom evaporator of the pure argon column 14, and fed in defined proportions into an overhead condenser of the pure argon column 14, an overhead condenser of the raw argon column 13, and into the low-pressure column 12. Fluid evaporating in the evaporation chambers of the overhead condensers of the crude argon column 13 and the pure argon column 14 is also transferred to the low-pressure column 12.

To obtain argon, fluid is withdrawn from the low-pressure column 12 slightly below the so-called argon maximum, at which about 10% argon is typically reached in the low-pressure column 12, as known and explained above. From the crude argon column 13, the resulting argon-depleted liquid is fed back into the low-pressure column 12 at a suitable position. Gas is withdrawn from the top of the crude argon column 13, transferred to the pure argon column 14, and further processed therein to obtain pure argon and a nitrogen-rich fluid, which can be released into the atmosphere in particular. The gaseous nitrogen-rich overhead product is withdrawn from the top of the pressure column 11, liquefied in a main condenser, which establishes a heat-exchanging connection between the pressure column 11 and the low-pressure column 12, and fed in portions as a reflux to the pressure column 11 and expanded into the low-pressure column 12. An oxygen-rich liquid bottom fraction and a nitrogen-rich gaseous top fraction are formed in the low-pressure column 12. The former is partially pressurized in a liquid state in pump 8, heated in the main heat exchanger 5 and made available as an internally compressed product. A liquid nitrogen-rich stream is withdrawn from a liquid retention device at the top of the low-pressure column 12 and exported from the air separation unit 100 as a liquid nitrogen product.

A gaseous nitrogen-rich stream withdrawn from the top of the low-pressure column 12 is passed through the main heat exchanger 5 and provided as a nitrogen product at the pressure of the low-pressure column 12. Furthermore, a stream from an upper region of the low-pressure column 12 is, after heating in the main heat exchanger 5, used as so-called impure nitrogen in the pre-cooling device 2 or, after heating by means of an electric heater, in the cleaning system 3.

To provide the advantages of the present invention discussed above, it is proposed herein to substitute a conventional liquid collecting unit 15 as shown for air separation unit 100 in Figure 1 by a phase-separating unit 200. Embodiments of an air separation unit 100 as proposed herein may therefore essentially resemble the air separation unit as shown in Figure 1, save for the substitution of the liquid collecting unit 15 by the phase-separating unit 200, embodiments of which will now be discussed.

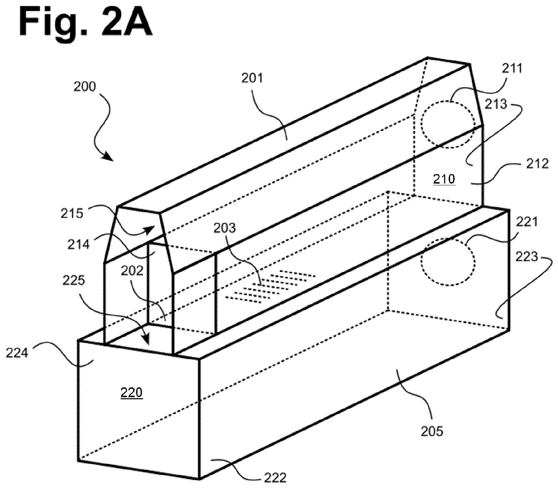

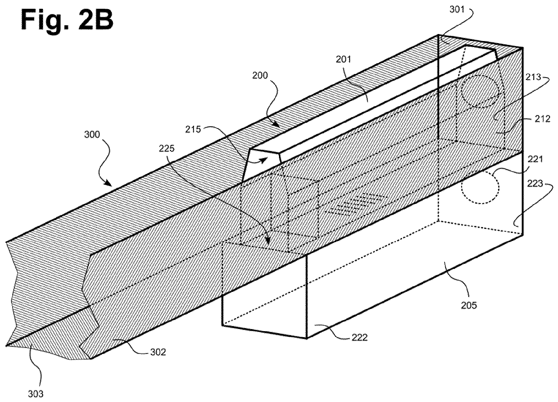

Figure 2B illustrates a phase-separating unit 200 according to an embodiment in a simplified perspective view, wherein edges of, and between, certain elements hidden by certain other elements are illustrated using dotted lines while edges visible in the view of Figure 2 are illustrated using solid lines.

As for liquid collecting unit 15, see Figure 1, the phase-separating unit 200 is provided in the pressure column 11 beneath a separation section 16 therein. It is associated with a trough unit shown in Figure 2B, which is omitted in Figure 2A for reasons of conciseness. The phase-separating unit 200 comprises a roof structure 201 configured to restrict an inflow of a cryogenic liquid draining from the separation section 16 into the phase-separating unit 200. The roof structure 201 may, or may not, comprise openings for gas to raise in pressure column 11, which may, in case present, be arranged at positions where no liquid is expected to drain from the above separation section 16. This may be the case at positions where certain forms of passages are provided in the separation section 16, such as chimneys of chimney trays mounting structures, or liquid-diverting structures of any kind known in the field of cryogenic separations. Therefore, even if roof structure 201 is shown to comprise a flat and essentially closed top sheet, this does not exclude openings being present in the top sheet. Furthermore, openings may also comprise means to restrict liquid inflow which may provide, nevertheless, passages for gas rising in the phase-separating unit 200.

In the example shown in Figure 2, the phase-separating unit 200 comprises an upper compartment 210 and a lower compartment 220 arranged beneath the upper compartment. More specifically, a vertical projection of the upper compartment 210 may, in a vertical projection onto a horizontal plane, in all or some embodiments disclosed herein, completely overlap with a corresponding vertical projection of the lower compartment 220 to said plane.

The upper compartment 210 has the shape of a longitudinal, rectangular trough which is delimited to a region above the upper compartment 210 by said roof structure 201 and to the lower compartment 220 by a dividing structure 202. The dividing structure 202 includes liquid passages 203 which are, only by way of example, illustrated as several slots in the dividing structure 202. It will be immediately understood that different and/or varying shapes, numbers, sizes, densities and positions of liquid passages 203 may be provided in the dividing structure 202 without departing from the scope of the present disclosure, particularly for reasons of fluid dynamics. In the example illustrated, the upper compartment 210 comprises two parallel, longitudinal side walls 212, of which only the longitudinal side wall 212 facing to the front is labelled, a first transverse side wall 213 and a second transverse side wall 214. While the first transverse side wall 213, save for a feed port 211 as discussed below, essentially closes a first transverse side of the upper compartment 210 as well as a region below a roof ridge defined by roof structure 201, the first transverse side wall 213 does not extend wholly to the roof structure 201, leaving an opening 215 and therefore a gas connection between the upper compartment 210 and a space defined inside of pressure column 11.

The lower compartment 220 is likewise provided as a longitudinal, rectangular trough comprising two longitudinal side walls 222, a first transverse side wall 223 and a second transverse side wall 224, a withdrawal port 221 being provided in the first transverse side wall 223 and particularly geodetically beneath the feed port 211 into the upper compartment 210. The upper compartment 210 is shorter than the lower compartment 210, in the example shown, and the first transverse side walls 213 and 223 of the first compartment 210 and the second compartment 220 are arranged to be coplanar and may be formed of a single piece of material. Adjacent to the second transverse side wall 224 of the lower compartment 220, a horizontal opening 225 is formed to allow gas to escape from lower compartment 220. A floor 205 closes the second compartment 220 to the bottom.

As mentioned, the upper compartment 210 is provided with feed port 211 which is configured to be supplied with the expanded throttle or Joule-Thomson stream 101 downstream of the Joule-Thomson expansion unit 7 and the lower compartment 220 is provided with withdrawal port 221 configured to withdraw liquid from the lower compartment 220 as shown below.

A space above the second transverse side wall 214 of the upper compartment 210, as mentioned before in other words, opens to an inner space of the pressure column 11, see opening 215 in Figure 2A. The throttle or Joule-Thomson stream 101 is, as mentioned, a biphasic stream, and a liquid phase of throttle or Joule-Thomson stream 101 which is provided via feed port 211 to the upper compartment 210 will drain, via liquid passages 203, to the lower compartment 212 in which it may collect and from which it may be withdrawn via the withdrawal port 221. A gaseous phase will raise in the upper compartment 210 and may leave the same via the opening 215 to the inner space of the pressure column. Ingress of liquid from above is restricted by the roof structure 201. In the embodiment shown, the lower compartment 220 is wider than the upper compartment 210 and to be arranged in a trough, as will now be discussed in connection with Figure 2B.

In Figure 2B, the phase-separating unit 200 comprising the same elements as already discussed in connection with Figure 2A is shown in connection with a trough unit 300. Some elements already discussed in connection with Figure 2A are not individually labelled for reasons of conciseness. Trough unit 300 comprising a transverse wall 301 which may also form the first transverse wall 313 of the upper compartment 210, two longitudinal side walls 302 and a bottom wall 303. Openings 215 and 225 of the upper and lower compartments 210 and 220 provide connections to an inner space of the trough unit 300. As can be seen from Figure 2B, the upper compartment 210 including its roof structure 201 is narrower than the trough unit 300. Therefore, spaces are provided at both sides of the upper compartment 210 such that liquid draining onto the roof structure 201 may be guided therein.

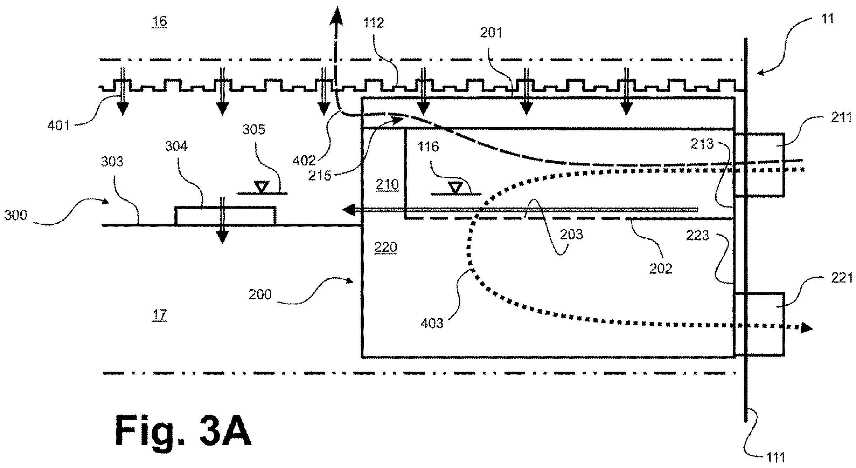

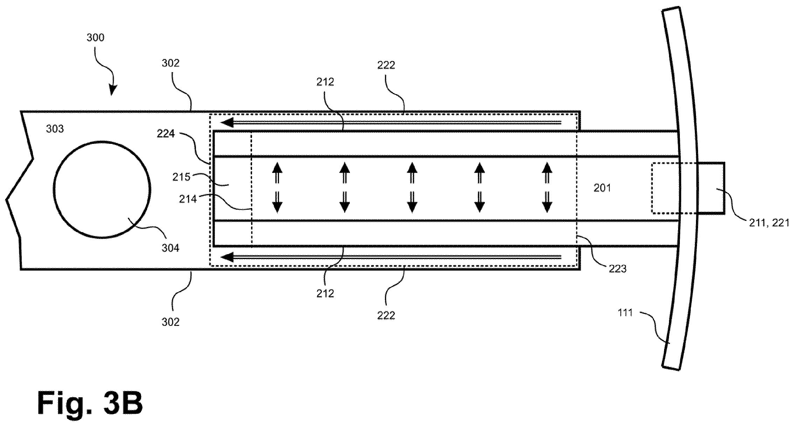

In Figures 3A and 3B, a phase-separating unit 200 is illustrated in a side and a top view as mounted in a pressure column 11 of an air separation unit. Some elements already explained in connection with Figures 2A and 2B, which may be present here as well, are not explained again for reasons of conciseness.

A wall of pressure column 11 is indicated 111, a lower structure of a separation section 16 is indicated 112. Reference numerals 303 and 304 indicate, as above, the bottom wall of the trough and furthermore a drain opening therein. A cryogenic liquid draining from separation section 16 is illustrated by double-stroke arrows one of which is indicated 301. This liquid accumulates in trough unit 300 as defined by a height of drain opening 114 and as indicated by level indicator 305 and further drains to a lower section 17 of pressure column 11. Besides the upper compartment 200 and in the trough unit 300, liquid 301 is diverted and is, as shown by a long horizontal double-stroke arrow, passed sideways in the trough unit.

The expanded throttle or Joule-Thomson stream fed into feed port 211 separates into a gas phase, indicated by a dashed arrow 402, and a liquid phase, indicated by a dotted arrow 403. The gas of the gas phase 402 raises in the upper compartment of the phase-separating unit 200 and leaves the same through opening 215 in order to further raise in pressure column 11. Liquid of liquid phase 403 drains through the dividing structure 202 via the liquid passages 203. A liquid level is also established in upper compartment 210 of phase-separating unit 200, as indicated by a level indicator 116. While not shown in Figures 3A and 3B for reasons of conciseness, it should be noted that a minor proportion of liquid 301 may also pass to lower compartment of phase-separating unit 200 and a minor proportion of liquid 303 may pass to an interior 17 of pressure column 11, but major proportions thereof are made to not mix, realizing the advantages of embodiments of the present invention.

## Claims

1. An air separation unit (100) comprising
a column system (10) including a pressure column (11) configured to be operated at a first pressure level and a low pressure column (12) configured to be operated at a second pressure level below the first pressure level; and
a Joule-Thomson expansion unit (7) configured to expand a Joule-Thomson stream (101) of compressed, pre-purified and cooled feed air into a phase-separating unit (200) provided in the pressure column (11), wherein
the phase-separating unit (200) is provided in the pressure column (11) beneath a separation section (16) and the phase-separating unit (200) comprises a roof structure (201) configured to restrict an inflow of a cryogenic liquid draining from the separation section (16) into the phase-separating unit (200).

2. The air separation unit (100) according to claim 1, wherein
the phase-separating unit (200) comprises an upper compartment (210) and a lower compartment (220) arranged beneath the upper compartment, the upper compartment (210) being delimited to a region above the upper compartment (210) by said roof structure (201) and to the lower compartment (220) by a dividing structure (202) including liquid passages (203).

3. The air separation unit (100) according to claim 2, wherein
the liquid passages (203) are provided as slits and/or holes in the same or different positions, sizes and/or densities in the dividing structure (202).

4. The air separation unit (100) according to claim 2 or 3, wherein
the upper compartment (210) is comprises a feed port (211) configured to be supplied with the Joule-Thomson stream (101) downstream of the Joule-Thomson expansion unit (7) and the lower compartment (220) comprises a withdrawal port (221) configured to withdraw liquid from the lower compartment (220).

5. The air separation unit (100) according to any one of claims 2 to 4, wherein
the upper compartment (210) is provided with a longitudinal shape comprising two longitudinal side walls (212), a first transverse side wall (213) and a second transverse side wall (214), the feed port (214) being provided in the first transverse side wall (214) and the second transverse side wall (214) being arranged to provide an opening (215) between an upper edge of the second transverse side wall (214) and the roof structure (201) to an inner space of the pressure column (11).

6. The air separation unit (100) according to any of claims 2 to 5, wherein
the lower compartment (220) is provided with a longitudinal shape comprising two longitudinal side walls (222), a first transverse side walls (223) and a second transverse side wall (224), the lower compartment (220) comprising an opening (225) towards an inner space of the pressure column (11), the withdrawal port (221) being provided in the first transverse side wall (223) of the lower compartment (220) and beneath the feed port (211) to the upper compartment (210), and the opening (225) being a horizontal opening of the lower compartment (220) being adjacent to the second transverse side wall (224) of the lower compartment (220).

7. The air separation unit (100) according claim 6, further comprising
a longitudinal trough unit (300) comprising parallel side walls (302),
a width of the trough unit (300) being smaller than a width of the upper compartment (210) of the phase-separating unit (200), the upper compartment (210) of the phase-separating unit (200) being arranged in the trough unit (300) such that the longitudinal side walls (222) are arranged in parallel and in a distance to the parallel side walls (302) of the trough unit (300), forming liquid channels.

8. The air separation unit (100) according claim 7, wherein
a bottom wall (303) of the trough unit (300) is arranged in parallel with and/or at a same geodetic elevation as the dividing structure (202) of the phase-separating unit (200), the trough unit (300) comprising a liquid weir configured to provide a liquid level (305) in the trough unit (300).

9. A method for cryogenic separation of air, comprising:
providing an air separation unit (100) comprising a column system (10) including a pressure column (11), a low pressure column (12), a Joule-Thomson expansion unit (7) and a phase-separating unit (200), the phase-separating unit (200) being arranged in the pressure column (11) beneath a separation section (16) thereof, and comprising a roof structure (201);
operating the pressure column (11) at a first pressure level and the low pressure column (12) at a second pressure level; and
expanding a Joule-Thomson stream (101) of compressed, pre-purified and cooled feed air into a phase-separating unit (200) provided in the pressure column (11) using the Joule-Thomson expansion unit (7), wherein
an inflow of a cryogenic liquid draining from the separation section (16) into the phase-separating unit (200) is restricted by the roof structure (201).

10. The method according to claim 9, further comprising:
forming a biphasic stream by said expanding the Joule-Thomson stream (101);
phase separating the biphasic stream using the phase-separating unit (200), forming a liquid phase and a gaseous phase;
passing at least a major part of the gaseous phase from the phase-separating unit (200) into an inner space (17) of the pressure column (11); and
withdrawing at least a major part of the liquid phase from the phase-separating unit (200) and from the pressure column (11) separately from further liquid withdrawn from the pressure column (11).

11. The method according to claim 9 or 10, wherein
an air separation unit (100) according to any of claims 1 to 8 is used.
